# EUROPEAN PATENT SPECIFICATION

(11) **EP 2 115 042 B1**
(45) Date of publication and mention of the grant of the patent: **20.07.2011**
(21) Application number: 08709440.5
(22) Date of filing: 15.02.2008
(51) Int. Cl.: C08J 3/00, C08J 11/06

(54) **RUBBER**
KAUTSCHUK
CAOUTCHOUC

(30) Priority: 16.02.2007 GB 0703125; 05.10.2007 GB 0719475
(43) Date of publication of application: 11.11.2009
(73) Proprietor: Polymer Recyclers Limited, Doncaster DN7 6AZ (GB)
(72) Inventor: KIND, Robert, Doncaster DN7 6AZ (GB); GREGORY, Martin, Doncaster DN7 6AZ (GB)
(74) Representative: Moore, Christopher Mark
(86) International application number: PCT/GB2008/000553
(87) International publication number: WO 2008/099202

(56) References cited:
- EP-A- 0 508 056
- EP-A- 0 639 674
- EP-A- 0 672 719
- EP-A- 0 931 809
- EP-B- 0 647 252
- WO-A-93/20132
- CA-A1- 2 481 743
- US-A- 6 047 911

## Description

This invention relates to the reuse of rubber, specifically to the recycling of used and waste rubber.

Over the past decade or so environmental awareness has been on the increase. The growing awareness of the deleterious affects that our activities can have has lead to environmental taxes being levied against industry. One such tax is the landfill tax which is applied across Europe and elsewhere (e.g. Council Directive 99/31/EC) and ensures that a charge is applied in relation to the disposal of each ton of landfilled material.

A particular concern is the disposal of rubber products, such as automobile tyres. It is estimated that around 300 million waste tyres are generated annually in North America alone and that the developed world produces about one billion tyres a year.

Clearly, with such volumes of rubber being required it is imperative for industry to find ways of reusing such products to ensure that disposal of waste or at end-of-life does not place a high taxation burden on the disposer and also to protect the environment.

Of course, in the case of rubber there is the problem that, as a thermoset polymer, it is difficult to devulcanise the rubber whilst maintaining the desirable properties of the original rubber material.

Over the years many attempts have been made to recycle rubber, mostly by attempting to devulcanise the used rubber to provide a material which is as close as possible to the original starting material.

Clearly, car tyres are not solely comprised of rubber. Other materials such as carbon black, oils and so on are added to ensure that the tyre has the required properties. The presence of these materials complicates the recycling process insofar as it is impossible to regenerate the original rubber and, in some cases, the other materials can interfere with the efficiency of the devulcanisation process. In automobile tyres there is also metal wires and fabric to contend with.

Accordingly, it is an object of the present invention to provide a process for recycling rubber and a recycled rubber material which does not rely on devulcanising the used or old rubber to provide a useful product.

A first aspect of the invention provides a method of recycling rubber, the method comprising:
obtaining one or both of crumb or granulate recycled rubber; and
mixing the crumb and/or granulate recycled rubber in a high shear mixer with virgin rubber to provide a mix.

Preferably, the granulate and/or crumb recycled rubber is provided as a major component of the mix, more preferably above 60 w/w% of the mix, most preferably 80 w/w% of the mix and above.

Preferably, the high shear mixer comprises a mixer selected from the group: internal mixer with tangential rotors (e.g. "Banbury" mixer), internal mixer with intermeshing rotors (e.g. "Farrel Intermix"), twin screw extruder, single screw extruder, injection moulding machine.

The virgin rubber may comprise a minor proportion of process aids such as dispersants. Typically, the process aids will be present as less than 5 w/w% of the mix, preferably less than 3 w/w% of the mix and most preferably 2.5 w/w% of the mix or less.

The mixing may take place for twenty minutes or less, preferably 15 minutes or less and advantageously 12 minutes or less, for example 6 minutes.

The mix may be subjected to a temperature of up to 200 °C, preferably up to 180 °C.

The crumb may be provided in a size range of <80 to 20 mesh (approximately <177 µm to 841 µm). The granulate may be provided in sizes up to 10 mm, for example up to 6 mm.

The mix may be further processed to provide a bale, sheet or pelletised material.

The method may further comprise mixing the mix or the baled or sheeted material with rubber, preferably virgin rubber to reduce the amount of rubber required in a product.

The method may further comprise incorporating a cure system. For example, the mix may be cured by adding a cure system. The method may alternatively or further comprise mixing a cure system with the crumb and/or granulate recycled rubber and/or the virgin material and/or adding a cure system to the high shear mixer.

Preferably, the cure system forms less than 5 w/w% of the mix, usually less than 4 w/w% of the mix and preferably less than 3 w/w% of the mix.

The method may comprise allowing the mix to cool and cure in a confined space for two to four hours, for example at a temperature of 140°C or less, say 120°C.

A second aspect of the invention provides a method of recycling rubber, the method comprising:
mixing the crumb and/or granulate recycled rubber in a high shear mixer with virgin rubber to provide a mix;
adding the mix to a second aliquot of virgin rubber and mixing to provide a batch; and
using the batch to form an article.

A third aspect of the invention provides a method of recycling rubber, the method comprising:
obtaining one or both of crumb or granulate recycled rubber; and
mixing the crumb and/or granulate recycled rubber in a high shear mixer with virgin rubber and a vulcanising cure system to provide a mix.

A fourth aspect of the invention provides a method of recycling rubber comprising mixing in a high shear mixer a mix consisting of:
one or both of crumb or granulate recycled rubber;
virgin rubber and
process aids and/or a vulcanising cure system.

A further aspect of the invention provides a rubber composition comprising an aggregate of a crumb and/or granulate used rubber retained in a virgin rubber matrix.

It will be appreciated that it is not necessary to add any further chemical species to the mix to provide a useful product.

It has been found that articles formed by compression moulding of rubber compounds containing high proportions of rubber crumb, e.g. crumb or granulate recycled rubber, exhibit generally acceptable surface finishes.

However, it has also been surprisingly found that the surface finish of such articles when formed by extrusion is markedly inferior to that of compression moulded articles thereby, for example, making such articles less desirable and/or unfit for purpose.

Accordingly, it is a further non-exclusive object of the present invention to provide extruded articles comprising rubber compounds containing high proportions of rubber crumb, but which also exhibit generally acceptable surface finishes.

Thus, a further aspect of the invention provides an article comprising a first portion made of a first rubber compound containing a high proportion of rubber crumb and a second portion made of a second rubber compound containing virgin rubber, wherein the second portion provides a skin over at least some of a surface of the first portion.

Preferably the article is a laminate of distinct, abutting, e.g. adhered, skin and core layers.

Preferably, the first rubber compound comprises granulate and/or crumb recycled rubber as a major component. For instance, granulate and/or crumb recycled rubber may make up more than 60 w/w% of the first rubber compound. A granulate and/or crumb rubber content in excess of 80 w/w% is most preferred.

Preferably, the second rubber compound comprises virgin rubber as a major component, typically in an amount of 60 w/w% or more.

The virgin rubber may be a natural rubber, e.g. Standard Malaysian Rubber (SMR) 5 or 10.

The second rubber compound may comprise carbon black.

The second rubber compound may comprise a minor proportion of process aids such as dispersants.

The skin may or may not be of uniform thickness. The skin may be continuous or discontinuous.

The surface on which the skin layer is provided may be an external or an internal surface.

The article may be in the form of an extrusion, typically a co-extrusion.

Advantageously, the extrusion or co-extrusion may have almost any cross-sectional profile. For example, the first portion may be round or square in cross-section, with the second portion providing a relatively thin outer skin. Alternatively, the first portion may be in the form of a hollow section with the second portion providing a skin over at least some of its outer and/or inner surfaces.

The article may be a co-extrusion of two or more rubber compounds of varying compositions. For example, a co-extrusion of three compounds may include a virgin rubber compound and two compounds containing differing proportions of recycled granulate and/or crumb rubber.

The skin may be provided by different compounds over different areas of the article.

In a yet further aspect of the invention there is provided a method of manufacture of an article, the method comprising co-extruding a first compound containing a high proportion of rubber crumb and a second compound made of virgin rubber.

Preferably, the first compound comprises granulate and/or crumb recycled rubber as a major component. For instance, granulate and/or crumb recycled rubber may make up more than 60 w/w% of the first rubber compound. A granulate and/or crumb rubber content in excess of 80 w/w% is most preferred.

Preferably, the second compound comprises virgin rubber as a major component, typically in excess of 60 w/w%.

As will be appreciated, co-extrusion provides many advantages.

The use of virgin materials to provide a skin provides the articles with an acceptable surface finish. Thus, consumption of virgin material is reduced, as compared with articles made using solely virgin material.

Further, by using recycled rubber, e.g. rubber crumb produced from used automobile tyres, the cost of manufacture of the articles may be reduced, as compared with manufacture using only virgin materials.

In some applications which require highly specific rubber compounds, the cost of manufacture of articles can be reduced by only providing the specific required compound at the areas of the surface where it is needed; if the core or bulk of the article is non-critical, then it can be made up of cheaper filler material comprising compounds containing a high proportion of rubber crumb, e.g. from recycled automobile tyres.

In addition to producing long products such as bars, rods or tubes, the co-extrusion process may be used to provide flat articles, e.g. sheets.

The articles produced by the co-extrusion process may subsequently be moulded, hand built or otherwise formed and shaped into finished products.

In order that the invention may be more fully understood it will now be described by way of example only and with reference to the accompanying drawings, in which
Figure 1 is a schematic diagram of a first embodiment of the invention;
Figure 2 is a schematic diagram of a second embodiment of the invention;

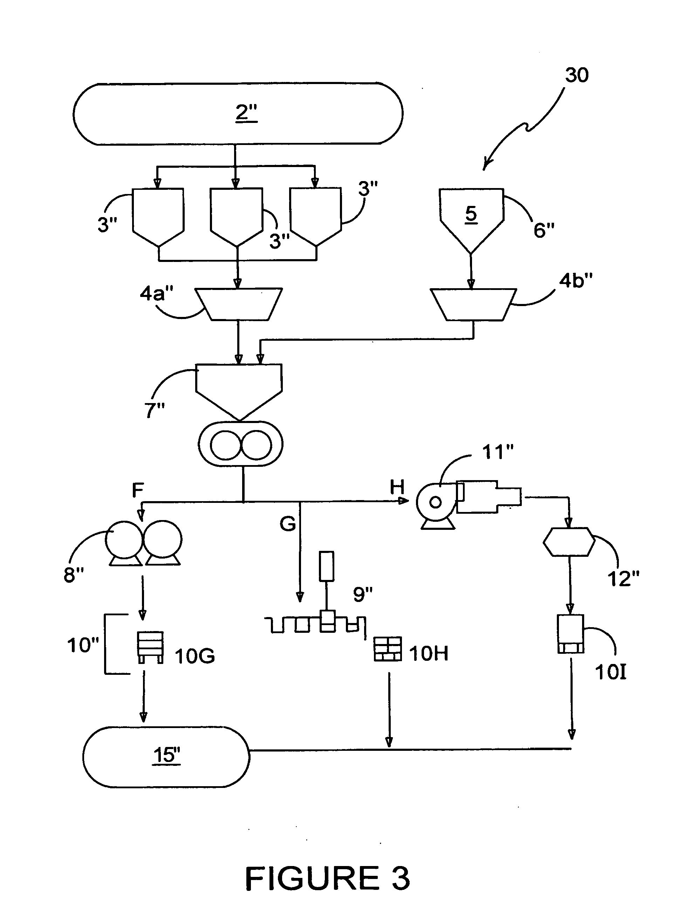

Figure 3 is a schematic diagram of a third embodiment of the invention;
Figure 4 is an enlarged view of a composition according to the invention; and
Figure 5 is an enlarged view of a sheet material according to an aspect of the invention.

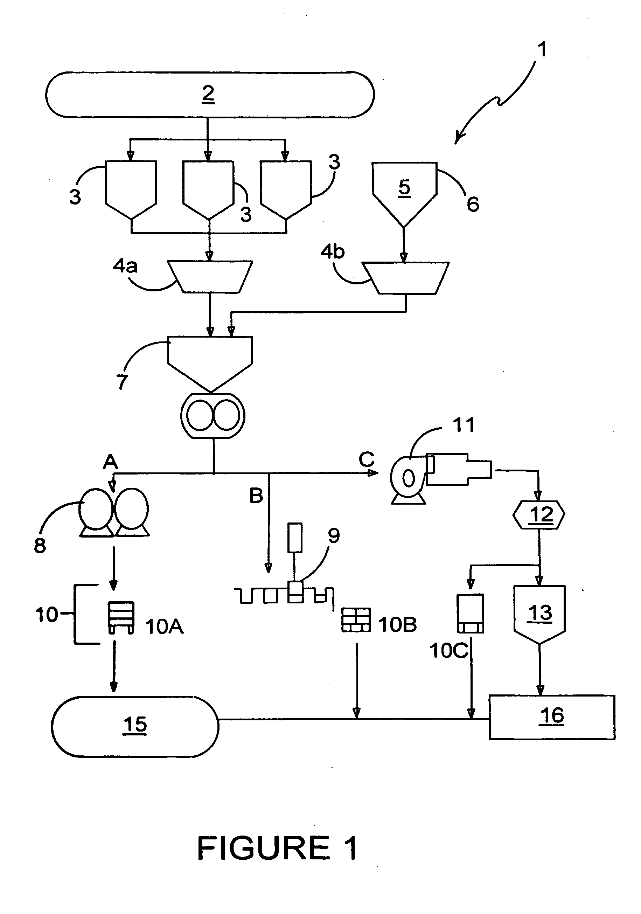

Referring in the first instance to Figure 1, there is shown apparatus 1 for the production of a rubber master batch from a used rubber material, such as tyre tread buffings 2, although other sources may be used.

Rubber crumb 2 is loaded into storage silos 3. The rubber crumb 2 typically has a size of from <80 to 20 mesh (i.e. a nominal particle diameter of from <177 µm to 841 µm) from where an aliquot is delivered to a weighing apparatus 4a.

Virgin polymer and, typically, process aids 5 are provided in a storage silo 6, from where an aliquot is delivered to a weighing apparatus 4b.

The weighed aliquots are conveyed to a high shear internal mixer 7 where the aliquots are mixed for, say, 10 minutes at a temperature of, say, 180°C.

Once mixed, the product may be provided in three forms, as indicated by the arrows A, B, C.

In the first instance, indicated by arrow A, the product is passed through mill blend apparatus 8 whereupon the so formed product 10A is provided in sheet form.

In the second instance, indicated at arrow B, the product is passed to baling apparatus 9, whereupon it is converted to 20-25 kg bales 10B.

In the third instance the product is passed to pelletising equipment 11 and from there to a cooler 12. The pelletised product 10C may be stored in a silo 13.

The bales 10B or pellets 10C may be palletised and all three types of product 10A-C may be conveyed to a point of use 15, for example by tanker or bulk container 16 in the pellet 10C form.

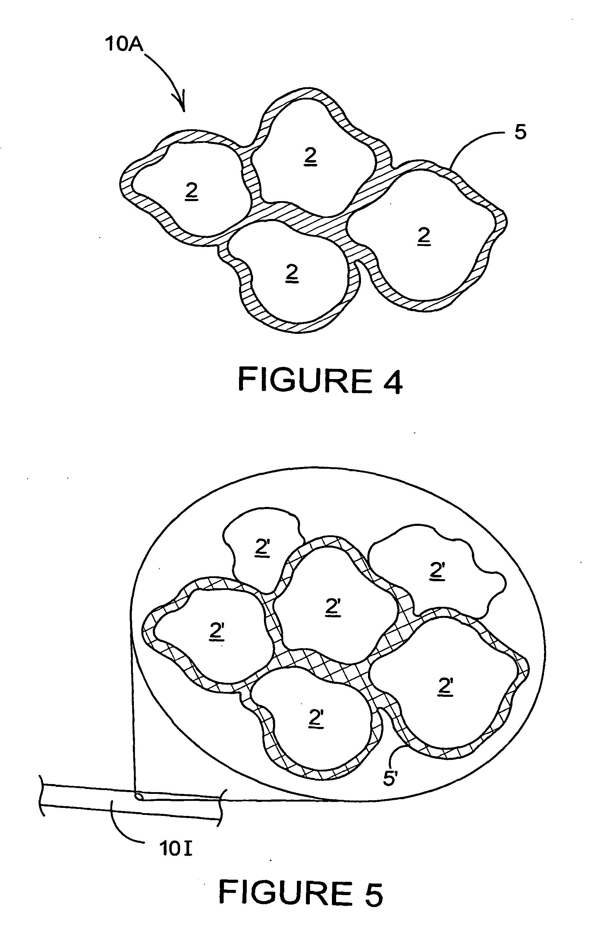

Referring to Figure 4 there is shown an enlarged view of a part of a product 10A, 10B, 10C comprising rubber crumb particles 2 in a virgin polymer 5 matrix.

In general the less polymer 5 that is added the more friable the product 10A, 10B, 10C

It has been found that the following routes are available for varying rubber compositions:

**Table 1. Potential Routes of Production**

| Parts Crumb^{A} | Parts Polymer^{B} | Route^{C} |
|---|---|---|
| 80-85 | 20-15 | A, B |
| >85-90 | <15-10 | B |
| >90-95 | <10-5 | B |
| >95 | <5 | C |

| | | |
|---|---|---|
| ^{A} at 40 mesh ^{B} including 1 w/w% process aids ^{C} routes as per Figure 1 | | |

A series of experiments were run with different types of starting materials, as follows:

**Table 2: Experimental Details**

| | Example 1 | Example 2 | Example 3 |
|---|---|---|---|
| Truck Tyre Crumb^{D}/g | 2936 | | |
| Truck Tyre Buffing ^{D}/g | | 2936 | 2777 |
| Polymer-Natural Rubber/g | 326 | 326 | 484 |
| Process aids^{E}/g | 72.4 | 72.4 | - |

| | | | |
|---|---|---|---|
| ^{D} at 40 mesh ^{E} includes stearic acid | | | |

The mixtures of Examples 1, 2 and 3 were mixed for 6 minutes at 120°C in the internal high shear mixer 7.

In order to test the so-formed materials, aliquots of the mix were taken and mixed with a standard cure system and cured using a small laboratory two roll mill and a laboratory compression press. So-formed sheets had the following characteristics:

**Table 3: Characteristics of cured material**

| | Example 1 | Example 2 |
|---|---|---|
| Hardness/IRHD | 65 | 64 |
| Tensile Strength/MPa | 8-13 | 15-18 |
| Elongation @ break/% | 260-290 | 350-400 |

It is believed that the differences in tensile strength between Examples 1 and 2 is due to the presence of fillers in the crumb of Example 1. However, it will be appreciated that both Examples 1 and 2 yielded a material which may be used in isolation.

The natural rubber used was either Standard Malaysian Rubber (SMR) 5 or 10.

It will be understood that Figure 1 shows a batch process. However, it will be appreciated that the rubber crumb 2 and polymer 5 could be mixed continuously in, for example, a twin screw extruder to provide a continuous source of product 10.

In either case, compounding agents may be added to change the characteristics of the material, e.g. to increase the viscosity of a batch which may aid downstream handleability.

The product 10A, 10B, 10C can be added to a virgin source of rubber to reduce the amount of virgin material required to make, say, truck tyres. Our experiments would appear to show that up to 60%, usually 50%, of the virgin material may be replaced by the product 10.

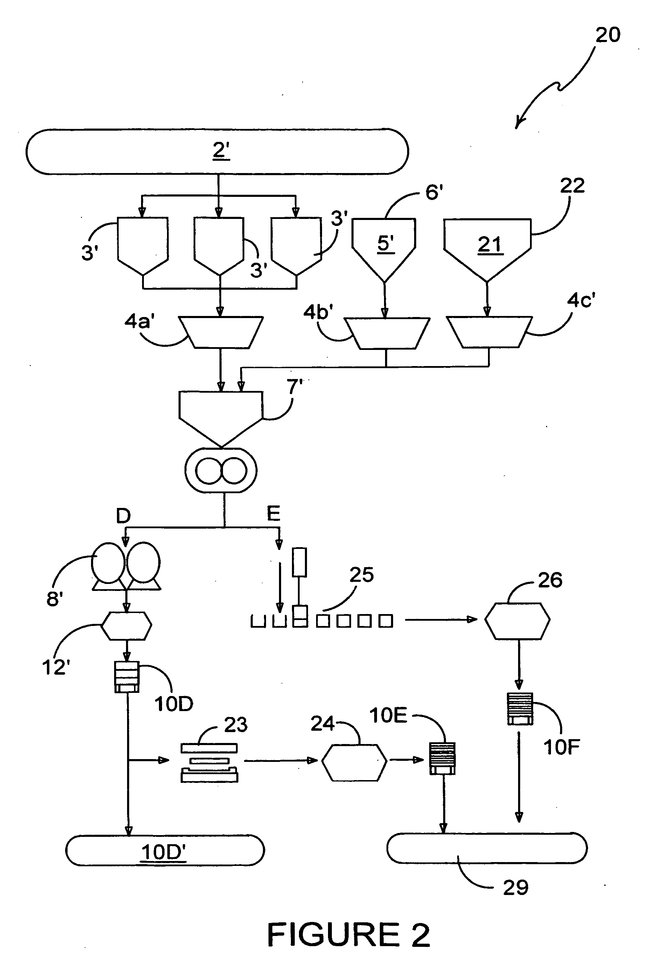

Referring to Figure 2, there is shown an exemplary method for forming acoustic rubber sheets from tyre sources. The apparatus 20 comprises several components which are similar to those of Figure 1 and which will be indicated using the same numeral with addition of a prime (').

Rubber crumb and granulate 2' from various tyre sources, having a size range of from <80 mesh to 6mm, is stored in silos 3'. Virgin polymer 5', with or without process aids is stored in a silo 6' and vulcanisation chemicals 21 are stored in a silo 22.

Each of the three components 2', 5', 21 are weighed at a weighing station 4a', 4b', 4c' respectively and are passed to a high shear internal mixer 7' where they are mixed for up to 10 minutes at a temperature of, say up to 130 °C.

Typically the ratio of crumb or granule 2' to virgin polymer 5' and vulcanisation chemicals 21 is 95:5 to 80:20, for example 80:15:5 (crumb; virgin; cure).

From the mixer 7' there are two potential routes which can be taken, indicated in the Figure as arrows D and E. The first route, D, includes passing the mixture to a mill blend apparatus 8' to provide a sheet product 10D which his cooled at a cooling station 12' and is then palletised for delivery as an uncured product 10D' to a point of use. Alternatively, the product 10D can be passed to a cure station 23 where it is subjected to temperature and pressure to effect a cure of the vulcanisation system to produce a sheet product 10E which may be trimmed to size at a cutting station 24 and may then be conveyed to a point of use 29, such as a customer.

The product 10E will typically have a density in the range of from 0.5 to 2.0 g cm⁻³.

In the second route, indicated by E, the hot mixture is passed to a low pressure block moulding apparatus 25 and from there to a slitting apparatus 26 to produce a sheet material product 10F having a density in the range of 0.5 to 1.1 gcm⁻³. The sheet product 10F may then be passed to a point of use 29.

The following series of experiments were conducted using various materials as follows:

**Table 4: Characteristics of Materials**

| | Example 4 | Example 5 | Example 6 | Example 7 |
|---|---|---|---|---|
| Truck Tyre buffings^{F}/g | 2777 | - | - | - |
| Truck Tyre granules^{G}/g | - | 2777 | 2082 | 2082 |
| Truck Tyre crumb^{F}/g | - | - | 694 | 694 |
| SMR 5L /g | 484 | 484 | | |
| SMR 10 /g | | | 484 | 484 |
| Process Aids /g | 127 | 127 | 127 | 127 |
| Cure System /g | 56 | 56 | 101* | 56 |

| | | | | |
|---|---|---|---|---|
| ^{F} approximately 40 mesh or below ^{G} 1 to 4 mm * includes 45 g blowing agent | | | | |

Each of the mixtures was mixed at 60 rpm for a time of 6 minutes. Examples 4 and 5 were mixed at a temperature of 120 °C and Examples 6 and 7 at a temperature of 130 °C.

Using route E, the mixes were cast into wooden moulds with wooden lids fitted and compressed to give different densities. The blocks which came from Examples 6 and 7 showed a higher degree of cure.

All blocks were allowed to cure at an initial temperature of 120°C for two to four hours.

The following densities were found:

**Table 5: Characteristics of Cured Materials**

| | Pressure Exerted / kg | Density / gcm⁻³ |
|---|---|---|
| Example 4 | As cast | 0.75 |
| Example 5 | As cast | 0.75 |
| Example 6 | 13.5 | 0.65 |
| Example 7 | 22.4 | 0.95 |

Using the mixtures of Example 4 (hereinafter Example 4') and the following two mixtures:

**Table 6: Characteristics of Materials**

| | Example 4' | Example 8 | Example 9 |
|---|---|---|---|
| Truck Tyre buffings ^{F}/g | 2777 | 2005.9 | 1851.6 |
| SMR 5L /g | 484 | 349.7 | 570 |
| Filler /g | - | 1170 | 1600 |
| Cure System / g | 56.5 | 40.3 | 37.2 |
| Process Aids /g | 127 | 291^{H} | 284^{H} |

| | | | |
|---|---|---|---|
| ^{H} includes processing oil | | | |

The procedure of route D was followed wherein the sheets from mill 8' were cooled rapidly at the cooling station 12' and were then passed to the curing station 23 where the sheet was cured as follows:

**Table 7: Characteristics of Cured Materials**

| | Example 4 | Example 8 | Example 9 |
|---|---|---|---|
| Density / gcm⁻³ | 1.11 | 1.40 | 1.50 |
| Hardness^{I} / IRHD | 62 | 59.5 | 59 |
| Tensile Strength^{I} / MPa | 17.7 | 9.1 | 8.1 |
| Elongation @ break^{I} / % | 392 | 353 | 378 |
| Hardness^{J} / IRHD | 60.5 | 57.3 | |
| Tensile Strength^{J} / MPa | 15.5 | 8.0 | |
| Elongation@break^{J} / % | 392 | 371 | |

| | | | |
|---|---|---|---|
| ^{I}3 minutes @ 170°C cure ^{J}6 minutes @ 170°C cure | | | |

Clearly, the two routes demonstrate that cured sheet material can be provided in various densities from recycled material. It also shows that a mixture of recycled materials can affect the density.

The material product 10D is shown in Figure 5 with particles of the recycled rubber 2 retained in a cured matrix 5'.

Figure 4 shows similar components to those shown in Figure 1 and those components will be denoted by the same numeral, with the addition of a double prime (").

In this procedure non-tyre sources of recycled rubber were investigated for suitability such as HNBR (hydrogenated nitrile butadiene rubber) and NBR (nitrile butadiene rubber).

It was found that all three routes F, G and H were suitable to make products 10G, 10H and 10I, in accordance with the description in relation to Figure 1.

Typically crumb of <80 to 20 mesh was issued in a crumb to virgin mix of 95:5 to 80:20 and mixing was conducted at up to 180°C for up to ten minutes.

A series of experiments were conducted as follows:

**Table 8: Characteristics of Materials**

| | Example 10 | Example 11 | Example 12 | Example 13 |
|---|---|---|---|---|
| HNBR Belt Buffings ^{F}/ g | 1630 | 2282 | 1575 | 2396 |
| Virgin NBR ^{K}/ g | 1630 | | | |
| Virgin HNBR ^{K}/ g | | | 1575 | |
| Example 10/g | | 978 | | |
| Example 12 /g | | | | 1027 |
| Process Aids | 20 | - | 40 | 40 |

| | | | | |
|---|---|---|---|---|
| ^{K} from a bale | | | | |

As will be understood the proportion of recycled rubber in each of the Examples 10 to 13 is 50, 85, 49 and 84 respectively.

In each case the mixing was conducted at 120°C for seven minutes at a rotor speed of 60rpm.

In order to test the characteristics of the mixtures, each was cured using an identical cure system at a temperature of 160°C for six minutes. The following characteristics were observed:

**Table 9: Characteristics of Cured Materials**

| | Example 10 | Example 11 | Example 12 | Example 13 |
|---|---|---|---|---|
| Hardness / IRHD | 58 | 66 | 58 | 66 |
| Tensile Strength / MPa | 6.1 | 12.8 | 16.3 | 20.7 |
| Elongation @ break /% | 357 | 314 | 451 | 338 |

Direct use of HNBR or NBR recycled buffings at 85% failed which is why incorporation of mixtures (e.g. Example 11 having some material from Example 10) was successfully attempted. Clearly such blended materials exhibit acceptable properties.

It will be appreciated that the method of the invention requires no devulcanisation chemistry and no other species need be added to the high shear internal mixer. For example, it is not necessary to add large amounts of water or other species.

The crumb and granulate materials may be used without significant pre-treatment, although it will clearly be desirable to remove large impurities such as metal wires and the like when tyre crumb is used.

It will be further recognised that although batch processes are described, as intimated above, continuous methods may also be employed, for example utilising twin screw extruders and continuous curing apparatus.

By way of example only certain further aspects of the invention will now be described with reference to the following drawings in which:

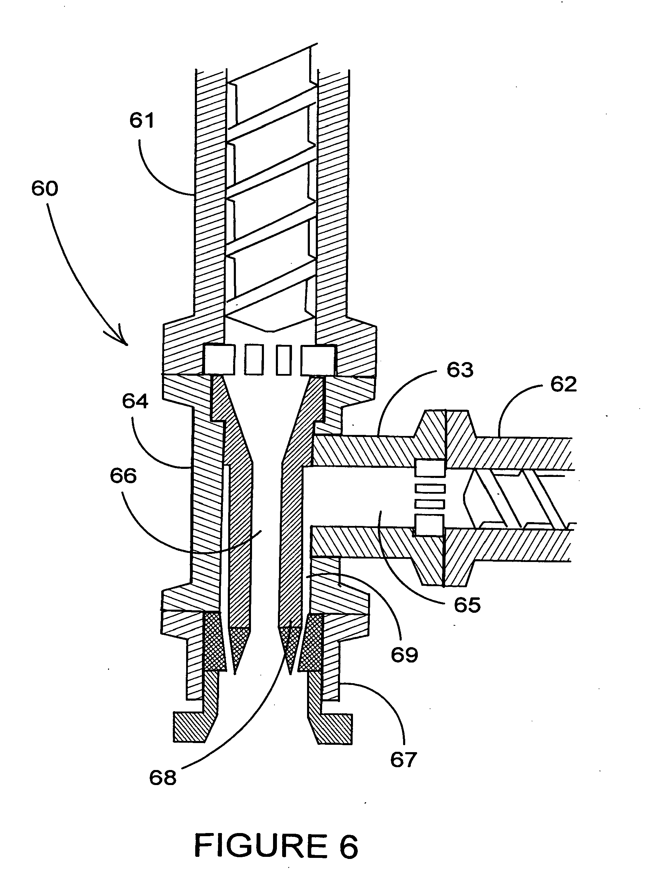

Figure 6 is a diagram of a typical head and die layout for producing articles according to the invention by co-extrusion; and

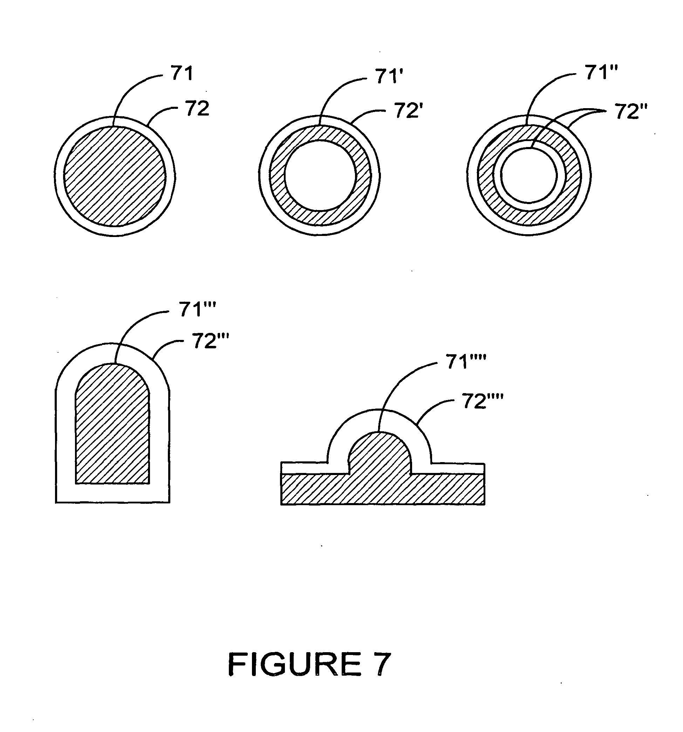

Figure 7 shows a selection of examples of co-extruded profiles according to the invention.

Referring to Figure 6, there is shown a typical head and die arrangement 60 for co-extrusion of rubber compounds according to the present invention.

A first compound is supplied to a first extruder 61, and a second compound is supplied to a second extruder 62. The two extruders are joined by a head arrangement comprising components 63 and 64. The head arrangement provides a flow path from each of the extruders 61 and 62 to a die assembly 67. In the arrangement shown in Figure 6, the two extruders 61 and 62 are positioned such that the compounds extruded therefrom enter the head arrangement in a direction perpendicular to one another.

The extruders 61 and 62 may each be in communication with one or more storage silos (not shown).

Located within the head arrangement is a tooling element 68. The tooling element 68 is in the general shape of a tube, the inner passage 66 through which provides communication between the first extruder 61 and the die assembly 67. Communication between the second extruder 62 and the die assembly 67 is provided by an annular passage 69 defined by a portion of the outer surface of the tooling element 68 and the inside wall of the head arrangement.

The mode of operation of the apparatus shown in Figure 6 will now be described.

First extruder 61 forces a compound having a high rubber crumb content into inner passage 66. The second extruder 62 forces a rubber compound made using virgin materials into cavity 65 within component 63. The tooling element 68 serves to keep apart the two flows of rubber compound until they reach the die assembly 67, where they merge to form a single extruded profile.

The profile shape of an extruded article will depend on the chosen geometry of the arrangement 60, in particular tooling element 68 and die assembly 67. Figure 7 shows a selection of typical cross-sections, e.g. as could be produced using the set-up of Figure 6. In each profile shown in Figure 7 the material that originated from extruder 61 is labelled as 71, 71', 71", 71"', etc. Likewise, the material that originated from extruder 62 is labelled as 72, 72', 72", 72"', etc.

The co-extruded profile may be vulcanised, e.g. in high pressure steam at 150 °C for a period of around 20 minutes. Any suitable vulcanisation method may be employed including continuous methods such as microwave, hot air and liquid cure medium.

The polymer, i.e. rubber, components of the compounds supplied to each extruder, may be the same, similar, or dissimilar. Technical or engineering as well as commercial considerations may determine the choice of polymer for each component.

The compound supplied to extruder 61 may comprise any compound or mix containing recycled granulated and/or crumb rubber according to the invention as described herein.

The compound may have been made by any method, including the methods according to the invention as described herein.

A further example of a suitable compound has the formulation set out in Table 10 below:

**Table 10: Sample formulation for supply to first extruder**

| Component | Parts by Weight |
|---|---|
| Whole truck tyre crumb 60 mesh | 163 |
| Natural rubber SMR 10 | 27 |
| Process aid | 2 |
| Stearic acid | 2 |
| Zinc oxide | 2 |
| Sulphur | 2.5 |
| MBT (2-mercapto benthiazole) | 0.5 |
| Total | 199 |
| % recycled crumb | 82 |

The compound supplied to extruder 62 may be any rubber compound containing at least a sizable, typically a major, proportion of virgin materials. In a preferred embodiment of the invention, all of the components are virgin materials.

Such a compound may be made using virgin materials and conventional mixing methods.

An example of a suitable formulation is set out in Table 11 below:

**Table 11: Sample compound formulation for supply to second extruder**

| Component | Parts by Weight |
|---|---|
| Natural rubber SMR10 | 100 |
| Carbon black N330, HAF | 20 |
| Whiting | 25 |
| Process oil | 5 |
| Zinc oxide | 10 |
| Stearic acid | 1 |
| Antioxidant TMQ | 1 |
| Sulphur | 3 |
| MBTS (Di-2-benzthiazyl disulphide) | 1 |
| DPG (N, N diphenyl guanidine) | 0.2 |
| Total | 166.2 |
| % natural rubber | 60.2 |

As will be appreciated, the compound supplied to extruder 62 may also contain recycled rubber crumb and/or other recycled materials, typically as no more than a minor proportion of the compound.

Advantageously, the compounds may be supplied to the extruders in any suitable form, e.g. as a powder, pellets, bales or sheets.

Where the ingredients for the compounds are fed into a continuous mixer in communication with the extruder, mixing and extrusion may be reduced to a single operation. The extruders may provide high-shear mixing. For example, the recycled rubber components could be added in dry powder form to the compound to be supplied to extruder 61.

For example, any combination of extrudable rubber or other polymer compounds may be used. There may be applications where it is desirable to have a "core" material having entirely different attributes from the "skin" material.

Further, a range of arrangements of co-extrusion apparatus different from those specifically described herein may be employed without departing from the scope of the invention.

In this specification, the terms recycled, used and old all refer to rubber which has already been utilised in a product, or is the by-product of the formation of, or use in, a first or primary product. Thus, the recycled material may come from an end-of-life product or as a waste by-product of the formation of a product or article.

## Claims

1. A method of making an article, the method comprising:
obtaining one or both of crumb or granulate recycled rubber:
mixing the crumb and/or granulate recycled rubber in a high shear mixer with solid virgin rubber to provide a mix, whereby the crumb and/or granulate recycled rubber is a major component of the mix;
adding the mix to a second aliquot of virgin rubber and mixing to provide a batch, whereby the mix accounts for up to 60 w/w % of the batch; and
using the batch to form an article.

2. A method according to Claim 1 further comprising adding a cure system to the mix, whereby the cure system forms less than 5 w/w % of the mix.

3. A method according to Claim 1 or Claim 2 further comprising mixing the or a cure system with the crumb and/or granulate recycled rubber and/or the virgin rubber and/or adding a cure system to the high shear mixer.

4. A method according to any of Claims 1 to 3, wherein the granulate and/or crumb recycled rubber is present at above 60 w/w % of the mix.

5. A method according to any preceding Claim, further comprising providing process aids as a minor component of the mix.

6. A method according to any preceding Claim, comprising mixing for twenty minutes or less.

7. A method according to any preceding Claim, comprising exposing the materials to a temperature of up to 200°C in the high shear mixer.

8. A method according to any preceding Claim, further comprising providing the mix as a bale, sheet or pelletized material.

9. A method according to any preceding Claim, wherein the article is formed by extrusion or co-extrusion.

10. A tyre comprising virgin rubber and recycled rubber, wherein the recycled rubber is incorporated as a composition comprising an aggregate of a crumb and/or granulate used rubber retained in a virgin rubber matrix, the crumb and/or granulate used rubber providing a major proportion of the composition and wherein the composition comprises up to 60 w/w % of the tyre.

11. A tyre according to Claim 10, containing up to 57 w/w % of recycled rubber.

12. An acoustic sheet formed from a composition comprising an aggregate of a crumb and/or granulate used rubber retained in a virgin rubber matrix, the crumb and/or granulate used rubber providing a major proportion of the composition.

13. An acoustic sheet according to Claim 12, wherein the used rubber is present in excess of 80 w/w %.

14. A methoc of manufacture of an acoustic rubber sheet comprising:
● obtaining rubber crumb and/or granulate from tyre sources, virgin polymer with optional process aids and vulcanisation chemicals; and
● mixing the rubber crumb and/or granulate, virgin polymer and vulcanisation chemicals in a high shear internal mixer for up to 10 minutes at a temperature of up to 130°C to form a mix.

15. A method according to Claim 14 further comprising:
● passing the mix to a mill blend apparatus to provide a sheet product which is cooled at a cooling station and is then palletised for delivery as an uncured product to a point of use; or
● passing the mix to a cure station where it is subjected to temperature and pressure to effect a cure of the vulcanisation system to produce a sheet product; or
● passing the mix, while it is hot, to a low pressure block moulding apparatus and from there to a slitting apparatus to produce a sheet material having a density in the range of 0.5 to 1.1 g cm⁻³.

## Patentansprüche

1. Verfahren zur Herstellung eines Artikels, wobei das Verfahren Folgendes umfasst:
Erhalten von Brocken oder Granulat von recyceltem Gummi,
Mischen der Brocken und/oder des Granulats aus recyceltem Gummi in einem Mischer mit hohem Scherwert mit festem Neugummi, um eine Mischung zu erhalten, wobei die Brocken und/oder das Granulat, das aus recyceltem Gummi hergestellt ist, eine größere Komponente der Mischung bildet,
Hinzufügen der Mischung zu einem zweiten Aliquot von Neugummi und Mischen, um eine Charge zu erhalten, wobei die Mischung bis zu 60 Gewichtsprozent (w/w%) der Gesamtmischung ausmacht, und Verwenden der Charge zur Bildung eines Artikels.

2. Verfahren nach Anspruch 1, welches weiter die Hinzufügung eines Härtesystems zur Mischung aufweist, wobei das Härtesystem weniger als 5 Gewichtsprozent der Mischung ausmacht.

3. Verfahren nach Anspruch 1 oder 2, welches ferner das Mischen des oder einem Härtesystem mit Brocken und/oder Granulat aus recycelten Gummi oder des Neugummis und/oder Hinzufügung eines Härtesystems zu einem Mischer mit hohem Scherwert umfasst.

4. Verfahren nach einem der Ansprüche 1 - 3, wobei das Granulat und/oder die Brocken aus recyceltem Gummi mehr als 60 Gewichtsprozent der Mischung ausmachen.

5. Verfahren nach einem der vorhergehenden Ansprüche, welches ferner das Zurverfügungstellen von Prozesshilfen als kleinere Komponente der Mischung umfasst.

6. Verfahren nach einem der vorhergehenden Ansprüche, welches das Mischen für zwanzig Minuten oder weniger umfasst.

7. Verfahren nach einem der vorhergehenden Ansprüche, welches das Erhitzen des Materials auf eine Temperatur von bis zu 200°C in dem Mischer mit hohem Scherwert umfasst.

8. Verfahren nach einem der vorhergehenden Ansprüche, welches ferner die Ausbildung der Mischung als Ballen, als Platte oder als Pelletmaterial umfasst.

9. Verfahren nach einem der vorhergehenden Ansprüche, wobei der Artikel durch Extrusion oder Coextrusion gebildet wird.

10. Ein Reifen, der Neugummi und recyceltes Gummi umfasst, wobei das recycelte Gummi als Zusammensetzung eingebracht ist, die ein Aggregat von Brocken und/oder Granulat aus Altgummi, das in einer Matrix aus Neugummi aufgenommen ist, wobei die Brocken und/oder das Granulat aus Altgummi einen größeren Anteil der Mischung ausmachen und wobei die Mischung bis zu 60 Gewichtsprozent des Reifens ausmacht.

11. Reifen nach Anspruch 10, welcher bis zu 57 Gewichtsprozent recyceltes Gummi aufweist.

12. Akustisches Plattenmaterial, das aus einer Mischung gebildet ist, die ein Aggregat von Brocken und/oder Granulat aus Altgummi umfasst, das in einer Matrix aus Neugummi aufgenommen ist, wobei die Brocken und/oder das Granulat, das aus Altgummi besteht, einen größeren Anteil der Zusammensetzung ausmacht.

13. Akustisches Plattenmaterial nach Anspruch 12, wobei das Altgummi mehr als 80 Gewichtsprozent ausmacht.

14. Verfahren zur Herstellung eines akustischen Gummiplattenmaterials, das Folgendes umfasst:
● Erhalten von Gummibrocken und/oder Granulat aus einem Reifenvorrat, Neupolymer mit optionalen Prozesshilfen und Vulkanisationschemikalien, und
● Vermischen der Brocken und/oder des Granulats aus Gummi, Neupolymer und der Vulkanisationschemikalien in einem Innenmischer mit hohem Scherwert für bis zu 10 Minuten bei einer Temperatur von bis zu 130°C, um eine Mischung zu bilden.

15. Verfahren nach Anspruch 14, welches ferner Folgendes umfasst:
● Übergeben der Mischung an eine Mischmühle, um ein Plattenprodukt zu erzeugen, welches an einer Kühlstation abgekühlt wird und dann als ungehärtetes Produkt zu einer Verwendungsstelle übergeben wird, oder
● Übergeben der Mischung an eine Härtestation, wobei es einer Temperatur und einem Druck unterzogen wird, um eine Härtung des Vulkanisationssystems zur Erzeugung eines Plattenmaterials zu bewirken, oder
● Übergeben der Mischung, während diese heiß ist, an eine Blockformeinrichtung mit niedrigem Druck und von dort zu einer Spalteinrichtung, um ein Plattenmaterial zu erzeugen, dass eine Dichte im Bereich von 0,5 - 1,1 g cm³ aufweist.

## Revendications

1. Procédé de fabrication d'un article, le procédé comprenant :
l'obtention d'un ou les deux d'un caoutchouc recyclé grumeleux ou granulé;
le mélange du caoutchouc recyclé grumeleux et/ou granulé dans un mélangeur à cisaillement élevé avec du caoutchouc vierge solide pour produire un mélange, de telle manière que le caoutchouc recyclé grumeleux et/ou granulé est un composant majeur du mélange;
l'ajout du mélange à une deuxième aliquote de caoutchouc vierge et le mélange pour produire un lot de telle manière que le mélange représente jusqu'à 60 % m/m du lot ; et
l'utilisation du lot pour former un article.

2. Procédé selon la revendication 1 comprenant en outre l'ajout d'un système de durcissement au mélange de telle manière que le système de durcissement représente moins de 5 % m/m du mélange.

3. Procédé selon la revendication 1 ou la revendication 2 comprenant en outre le mélange d'un système de durcissement avec le caoutchouc recyclé grumeleux et/ou granulé et/ou le caoutchouc vierge et/ou l'ajout d'un système de durcissement au mélangeur à cisaillement élevé.

4. Procédé selon l'une quelconque des revendications 1 à 3, dans lequel le caoutchouc recyclé grumeleux et/ou granulé est présent à plus de 60 % m/m du mélange.

5. Procédé selon l'une quelconque des revendications précédentes, comprenant en outre la fourniture d'adjuvants de traitement en tant que composant mineurs du mélange.

6. Procédé selon l'une quelconque des revendications précédentes, comprenant le mélange pendant vingt minutes ou moins.

7. Procédé selon l'une quelconque des revendications précédentes, comprenant l'exposition des matériaux à une température de jusqu'à 200 °C dans le mélangeur à cisaillement élevé.

8. Procédé selon l'une quelconque des revendications précédentes, comprenant en outre la fourniture du mélange sous forme de balle, de feuille ou de matériau granulé.

9. Procédé selon l'une quelconque des revendications précédentes, dans lequel l'article est formé par extrusion ou coextrusion.

10. Pneu comprenant du caoutchouc vierge et du caoutchouc recyclé, dans lequel le caoutchouc recyclé est incorporé sous la forme d'une composition comprenant un caoutchouc usagé grumeleux et/ou granulé dans une matrice de caoutchouc vierge, le caoutchouc usagé grumeleux et/ou granulé représentant une proportion majeure de la composition et dans lequel la composition représente jusqu'à 60 % m/m du pneu.

11. Pneu selon la revendication 10, contenant jusqu'à 57 % m/m de caoutchouc recyclé.

12. Feuille acoustique formée d'une composition comprenant un agrégat d'un caoutchouc usagé grumeleux et/ou granulé retenu dans une matrice de caoutchouc vierge, le caoutchouc usagé grumeleux et/ou granulé représentant une proportion majeure de la composition.

13. Feuille acoustique selon la revendication 12, dans laquelle le caoutchouc usagé est présent à plus de 80 % m/m.

14. Procédé de fabrication d'une feuille de caoutchouc acoustique comprenant :
- l'obtention de caoutchouc grumeleux et/ou granulé de sources de pneus, de polymère vierge avec des adjuvants de traitement facultatifs et d'agents chimiques de vulcanisation ; et
- le mélange des caoutchoucs grumeleux et/ou granulé, polymère vierge et d'agents chimiques de vulcanisation dans un mélangeur à cisaillement interne élevé pendant jusqu'à 10 minutes à une température allant jusqu'à 130 °C pour former un mélange.

15. Procédé selon la revendication 14 comprenant en outre :
- le passage du mélange dans un appareil de broyage-mélange pour obtenir un produit en feuille qui est refroidie à une station de refroidissement et est ensuite granulée pour distribution sous forme de produit non durci à un point d'utilisation; ou
- le passage du mélange à une station de durcissement où il est soumis à une température et une pression pour effectuer un durcissement du système de vulcanisation pour produire un produit en feuille ; ou
- le passage du mélange, pendant qu'il est chaud, dans un appareil de moulage de bloc à basse pression et de celui-ci vers un appareil de fendage pour produire un matériau en feuille ayant une masse volumique dans la plage de 0,5 à 1,1 g.cm⁻³.
